# EUROPEAN PATENT SPECIFICATION

(11) **EP 1 762 164 B1**
(45) Date of publication and mention of the grant of the patent: **03.12.2008**
(21) Application number: 06018449.6
(22) Date of filing: 04.09.2006
(51) Int. Cl.: A47J 37/07

(54) **Barbecuing device**
Grill-Gerät
Dispositif de grill

(30) Priority: 09.09.2005 CN 200520118496 U
(43) Date of publication of application: 14.03.2007
(73) Proprietor: Chang, David, Arcadia CA 91006 (US)
(72) Inventor: Chang, David, Arcadia CA 91006 (US)
(74) Representative: Thum, Bernhard

(56) References cited:
- US-A- 5 086 753
- US-A1- 2001 047 541

## Description

### TECHNICAL FIELD

The present invention relates to a barbecuing device.

### BACKGROUND OF THE INVENTION

Any discussion of the prior art throughout the specification should in no way be considered as an admission that such prior art is widely known or forms part of common general knowledge in the field.

Throughout this specification, the terms "*barbeque*", "*barbecuing*", and variants thereof mean a method of cooking food with the heat and hot gases of a fire, smoking wood, or hot coals and the like, and includes both indirect and direct methods of such cooking.

Occidentals usually prefer to barbecue food with a gas barbecuing device, which is typically a movable cooking apparatus having a movable cabinet, which contains one or more gas tanks, and a gas-powered burner. The burner is located below an upper cover of the movable cabinet, and food is barbequed on a grill plate over the gas-powered burner.

Document US-A-5 086 753 shows a barbequing device of this kind.

When such a gas-powered burner is used to barbecue meat foodstuffs, a significant amount of grease is produced. This excess grease adversely affects the sanitary condition of the food and has an unfavorable effect on the normal use of the gas-powered burner. It is also frequently difficult to remove this grease from the surfaces of the device. It is also inconvenient to use this gas barbequing device because some types of food need to be turned frequently by hand so as to be cooked uniformly.

### OBJECT OF THE INVENTION

It is an object of the present invention to overcome or ameliorate at least one of the disadvantages of the prior art, or to provide a useful alternative.

An object of the present invention in at least one preferred form is to provide a barbequing device which provides a convenient means of cleaning the device, especially by removing grease. It is an object of the present invention in at least one preferred form to provide a barbequing device that automatically cooks food uniformly. An object of the present invention in at least one preferred form is to provide a barbecue device that provides automatic control over the temperature in the grill, fuel ignition, and safety measures of the device.

### SUMMARY OF THE INVENTION

The present invention provides a device for barbequing food, said device including:
a cabinet for storing a power source;
a burner connectable to said power source for cooking said food, and
a means for steam cleaning said device.

Preferably, the steam cleaning means includes a steam generator and a device for delivering the steam fluidly connected to the steam generator. Preferably, the steam delivery device includes a discharge nozzle for discharging the steam and a trigger for actuating the steam delivery device. Preferably, the steam delivery device discharges pressurised steam to clean the outer surfaces of the burner and the barbequing device. Preferably, the steam delivery device is a steam blowgun.

Preferably, the steam generator includes a steam boiler storable in the cabinet. Preferably, the steam generator is connectable to the power source.

Preferably, the device includes a food grilling support for supporting one or more food grilling elements, wherein the food grilling elements are rotatable relative to the support to uniformly expose said food to the heat from said burner. Preferably, the food grilling support is arranged adjacent the burner. Preferably, the food grilling support includes holders for retaining the food grilling elements adjacent the burner, said holders being rotatable relative to the food grilling support. Preferably, the holders are rotationally driven by a transmission means.

Preferably, the transmission means includes one or more transmission shafts drivable by a motor. Preferably, each transmission shaft includes a transmission coupling for rotating a respective holder. In one embodiment, the holders are integrally formed with the transmission couplings for receiving respective ends of the food grilling elements. Preferably, the holders are axially aligned bores formed in the transmission shafts. Preferably, the bores have a shape complementary to the ends of the food grilling elements to securely hold the food grilling elements so that the food grilling elements rotate with the transmission shafts.

Preferably, the food grilling support includes a bracket for supporting an opposite end of each food grilling element, such that each food grilling element suspends food above the burner. Preferably, the bracket includes positioning means for securely holding the food grilling elements on the bracket. Preferably, the positioning means include notches in the bracket.

Preferably, the food grilling elements are skewers for removably holding food. Preferably, the skewers are removably connectable to the holders. Preferably, the skewers include means for retaining the skewers to the holders.

Preferably, the motor is an electric motor. Preferably, the electric motor is connected to an electrical power source. The electrical power source preferably includes a thermoelectric generator, solar cells, a steam driven generator or built-in fuel cells. Preferably, the electric power source is connectable to an accumulator by a charging circuit. Preferably, the electric motor is connected to the accumulator.

Preferably, thermoelectric generators are provided on inner and outer surfaces of the device adjacent the burner to maximise the temperature differential between the inner and outer surfaces and increase the efficiency of the thermoelectric generators. In one embodiment, the thermoelectric generators are provided on the inner and outer surfaces of a cover of the cabinet.

Preferably, solar cells are provided on the outer surfaces of the device. In one embodiment, the solar cells are provided at the rear and top of the device.

Preferably, the device includes a control circuit for controlling the temperature in the burner, a gas-igniting circuit, and a safety-guarding circuit, and a steam controlling circuit, wherein said control circuit and said steam controlling circuit are connected to the power source and are equipped with control switches arranged on the device.

Preferably, the burner includes a gas-powered jet burner. Preferably, the power source is a gas supply.

Preferably, the cabinet is movable. Preferably, the cabinet includes wheels.

A particularly preferred embodiment provides a barbeque device that is easily cleanable and provides an automated rotary grill for cooking food uniformly. In this embodiment of the barbecuing device of the present invention, steam cleaning of the barbecuing device is realized with the steam blowgun and food holding forks are rotationally driven by an electric motor to automatically grill food uniformly over the burner. At the same time, the temperature set-up in the grill, automatic firing, and flameout and gas leakage protection is achieved by a control circuit, which controls the temperature in the food grill area, a gas-igniting circuit and a safety-guarding circuit.

### BRIEF DESCRIPTION OF THE DRAWINGS

A preferred embodiment of the invention will now be described, by way of example only, with reference to the accompanying drawings in which:
Figure 1 is a perspective view illustrating a barbecuing device of the present invention;
Figure 2 is an exploded perspective view of a rotational grill support, in the barbecuing device of Figure 1;
Figure 3 is a schematic view of the gear transmission for the rotational grill support of Figure 2;
Figure 4 is a schematic view of an alternative gear transmission for the rotational grill support of Figure 2;
Figure 5 is a schematic drawing of a steam cleaning means used in the barbequing device of Figure 1;
Figure 6 is a schematic drawing of the rotational grill support of Figure 2 in an operational state;
Figure 7 is a schematic drawing of a food-holding fork for use in the rotational grill support of Figure 2;
Figure 8 is a schematic drawing of a different type of food-holding fork for use in the rotational grill support of Figure 2;
Figure 9 is a perspective view of the barbequing device of Figure 1 illustrating the location of power sources;
Figure 10 is a rear perspective view of the barbequing device of Figure 1;
Figure 11 is a schematic block diagram of the control circuit of the barbequing device of Figure 1; and
Figure 12 is a schematic block diagram of the safety mechanism used in the barbequing device of Figure 1.

### DETAILED DESCRIPTION OF THE PREFERRED EMBODIMENT

The device of the present invention will be further discussed hereinafter with reference to a preferred embodiment when considered in connection with the accompanying drawings.

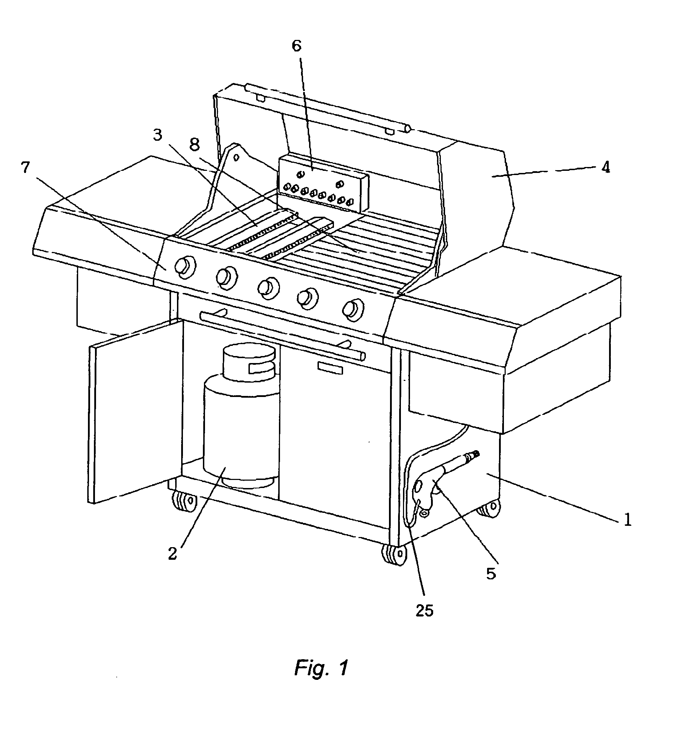

As shown in Figure 1, the device for barbequing food includes a housing or cabinet 1 and a gas tank 2 located inside the cabinet 1. The cabinet includes mounted wheels so that the device is moveable, and thus portable for use in different locations. A gas-powered burner 3, which is supplied with gas from the gas tank 2, is mounted on the upper portion of the cabinet 1. The device also includes a cover 4 and a corrugated plate 8 located adjacent the gas burner 3. The corrugated plate 8 may be heated by the burner 3 or by another burner beneath the plate, to cook food. A rotational grill support 6 is provided at a position between the gas-powered burner 3 and the cover 4. A control panel 7 controls operation of the barbecuing device 1.

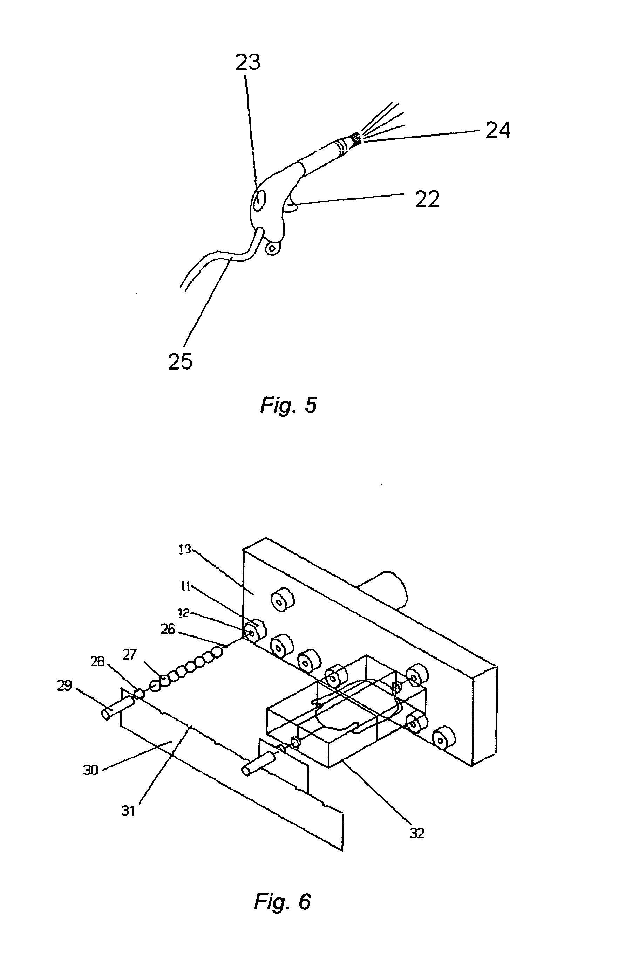

As shown in Figure 1, a steam cleaning means in the form of a steam blowgun 5 is stowed to one side of the cabinet 1. A gas-type steam boiler (not shown) is stored within the cabinet 1, and is connected to the steam blowgun 5 by a conduit 25. As best shown in Figure 5, the steam blowgun 5 includes a trigger 22 and a steam discharge nozzle 24. The blowgun 5 discharges pressurised steam to easily and conveniently remove any contaminants, such as grease, from the outer surface of the burner 3, plate 8, or any other surface of the barbequing device to which grease may have adhered during the barbequing of food.

The rotational grill support 6 includes a front casing 13 and a rear casing 13, containing a transmission means for rotating a plurality of food grilling elements in the form of food-holding skewers or forks 26. An electric gear motor 9 is connected to the rotational grill support 6 via the transmission means.

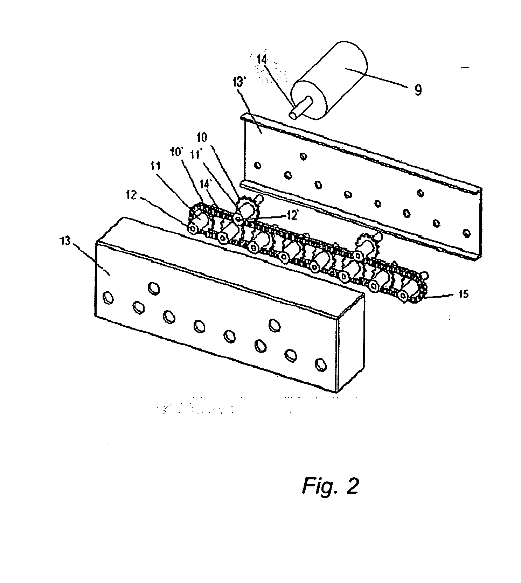

As shown in Figures 2 to 4 and 6, the transmission means includes two rows of transmission shafts 11, 11' and transmission sprockets 10, 10' securely fixed on the transmission shafts 11, 11'. A chain 15 is tensioned on the bottom row of transmission sprockets 10 and engages the top row of transmission sprockets 10'. A connection end 14' of one transmission shaft 11 is coupled to an output shaft 14 of the gear motor 9. In this manner, the transmission shaft 11 is connected to the motor 9 to subsequently drive the transmission sprockets 10, 10' via the chain 15. The transmission shafts 11, 11' are formed with bores 12, 12' that are axially aligned with the central longitudinal axes of their respective shafts 11, 11'. The bores 12, 12' function as transmission couplings for directly receiving the ends of the food-holding forks 26 such that the forks 26 are removably coupled to the transmission shafts 11, 11'. In an alternative embodiment, separate holders for the forks 26 can be provided for engagement with the bores 12, 12', or the transmission shafts 11, 11' directly.

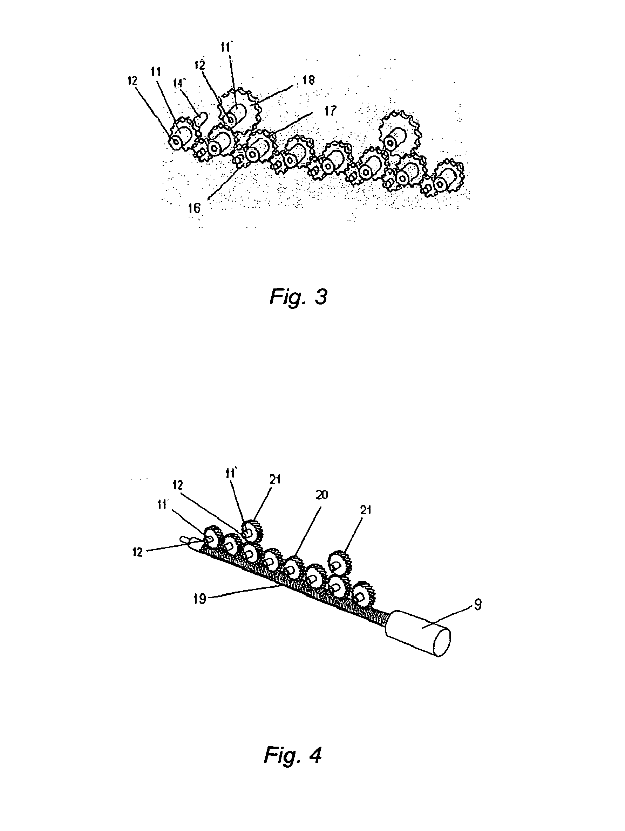

The front casing 13 and the casing 13' of the grill support 6 also forms a gear case for the transmission gears of the transmission means. The casings 13, 13' include through-holes corresponding to the relative positions of the transmission shafts 11, 11' in the transmission means so that the transmission shafts 11, 11' pass therethrough and form an integral shaft sleeve case. A set of transmission gears are mounted to the transmission shafts, with adjacent gears driven by intermediate gears. In the embodiment, gears 16, 17 and 18 are mounted to the transmission shafts 11, 11' and constitute the gear transmission means for the rotational grill support 6, as best shown in Figure 3. In an alternative embodiment, the gears 16 to 18 are replaced by a worm 19, and gears 20, 21 to form a worm-gear transmission means, as best shown in Figure 4.

The rotational grill support 6 can hold the forks 26 in a cantilevered manner. However, it is preferable that the forks 26 are supported at both ends, and a bracket 30 is provided opposite the case 13, 13' for this purpose. The bracket 30 includes a series of indentations or notches 31 for locating respective ends of the food holding forks 26.

As shown in Figure 6, each food-holding fork 26 is a straight, cylindrical rod that is releasably secured to the transmission shaft 11 at one end and is supported by the bracket 30 at its other end, such that it can rotate relative to the bracket 30 and the front case 13 above the gas burner 3. In order to securely locate the food-holding fork 26, a locking nut 28 is provided on the food-holding fork 26 to limit axial relative movement of the food-holding fork 26 to the bracket 30. A handle 29 is also provided on each food-holding fork 26 to facilitate installation of the forks 26 onto the grill support 6.

The front end of a food-holding fork 26 includes a lug, which has a regular polygon or a spade-like shape. The bores 12, 12' in the transmission shafts 11, 11' are formed with a complementary shape and size to the lugs of the food-holding forks 26, such that food-holding forks 26 fit snugly within the holes 12, 12' and are securely retained therein. Thus, the transmission shafts 11, 11' and the food-holding forks 26 are locked together and rotate as a single body, and enabling the uniform cooking of food skewered by the forks 26 over the burner 3.

The food-holding forks 26 may be directly inserted into food objects 27, such as small meats. A steel cage 32 may be releasably secured to the food-holding forks 26 so that large and soft food, such as fish, may be placed within the cage 32 for barbequing. The space between the transmission shafts 11' in the top row is relatively large, suitable for barbecuing large food pieces, whereas the space between the transmission shafts 11 in the bottom row is smaller, suitable for barbequing small food pieces.

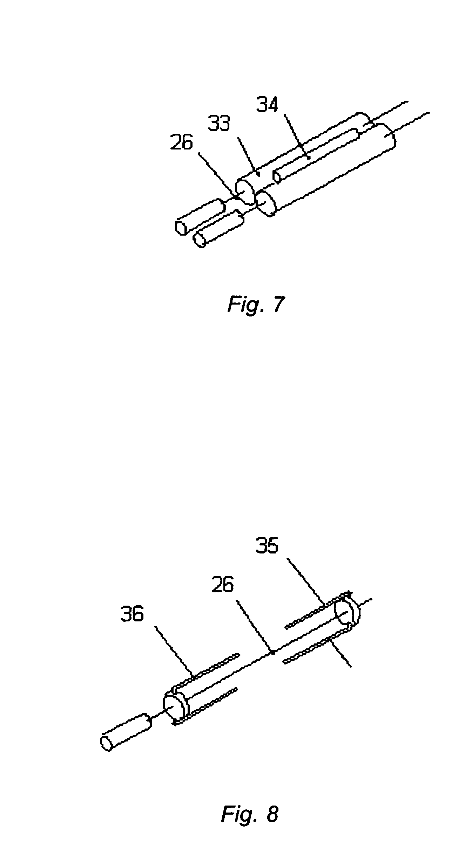

As shown in Figure 7, the middle portion of a food-holding fork 26 may be configured to include a round roller 33 to increase the effective diameter of the food-holding fork 26. This permits long foods 34, such as hot-dog sausages, to be placed between two forks 26 and supported by their respective round rollers 33 for simultaneous rotation with the round rollers 33.

As shown in Figure 8, two flexible arms 35 and 36 may be symmetrically fixed at either end of the food-holding fork 26. The flexible arms 35 and 36 clamp large pieces of food, such as whole chickens, duck and other poultry, so that these foods can rotate together with the food-holding fork 26 for barbequing above the gas burner 3.

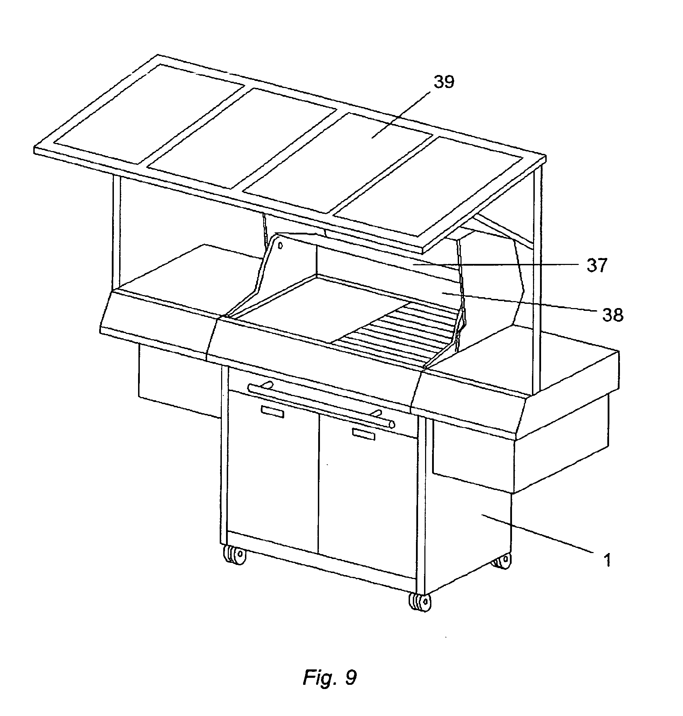

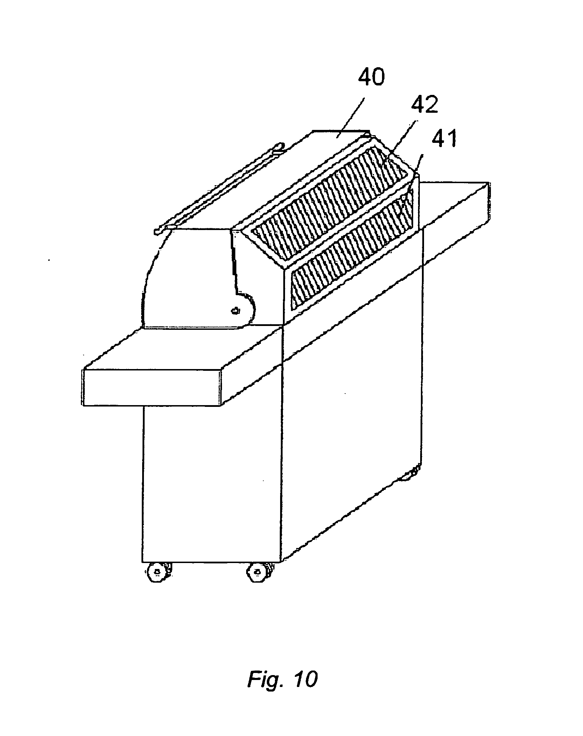

The barbecuing device according to the preferred embodiment of the present invention also uses a variety of electrical power sources, including a thermoelectric generator 37, 38, solar cells 39, 40, 41, 42, steam generator 43 and fuel cell 44. One ore more of these electric power sources can be used as the energy source for the burner 3 and for driving the rotational grill support 6. The solar cells, thermoelectric generator, steam generator and fuel cells may be easily employed in the device using conventional techniques. For example, and as shown in Figure 9, several thermoelectric generators 37, 38 are arranged on the inner and outer surfaces of the cover 4 of the cabinet 1. Since the cover 4 is in relatively close proximity to the gas burner 3, the temperature differential is maximised between the inner and outer surfaces of the cover, thus increasing the efficiency of the thermoelectric generators 37, 38. Solar cells 39, 40, 41 and 42 can be located on the outer surfaces of the device as an additional or alternative energy source, as best shown in Figures 9 and 10.

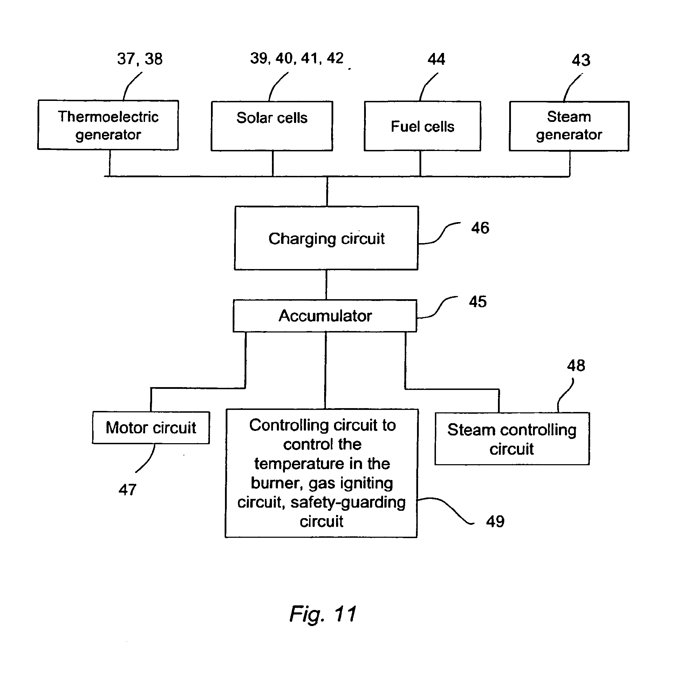

These power sources are connected to an accumulator 45 through a charging circuit 46, as best shown in Figure 11. The accumulator is located inside the cabinet 1, and a motor circuit 47 and a steam controlling circuit 48 are also connected to the accumulator 45 and the charging circuit 46 to access these power sources. The barbecuing device 1 is also provided with a control circuit 49 which controls the temperature in the grill, a gas igniting circuit and a safety-guarding circuit. The control circuit, gas igniting circuit and safety-guarding circuit are also connected to the power sources through the accumulator 45.

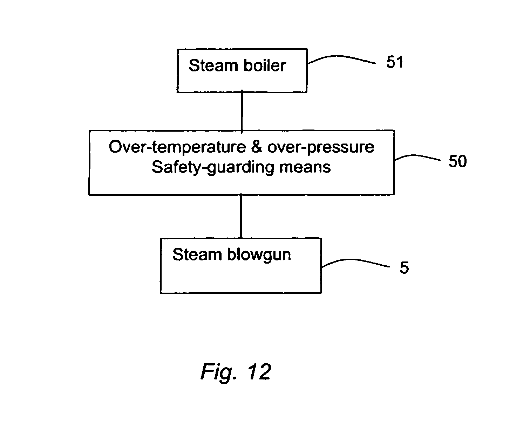

Figure 12 shows a safety mechanism for the device, where a safety guard means (typically a circuit 50) monitors the temperature and pressure within the steam boiler 51 to ensure that the steam discharged from the steam blowgun 5 does not exceed preset levels of temperature and pressure when cleaning the device, protecting the user from harm and the device from damage.

Thus, the preferred embodiment of the invention provides a barbecuing device where grease and other contaminants can be cleaned easily and very conveniently with the steam blowguns. Furthermore. The rotational grill support 6 provides an automated means for cooking food uniformly over the gas burner 3.

Electric power is used as the energy source for the whole device and the gas tank can be accommodated the cabinet, so the device is particularly suitable for mobile outdoor barbecues without being restricted by the availability of outdoor electric power.

Any products identical or similar to the present invention, falling within the scope of the claims, fall within the scope of the present invention.

## Claims

1. A device for barbequing food, said device including:
a cabinet (1) for storing a power source (2);
a burner (3) connectable to said power source (2) for cooking said food,
**characterized by**
a means (5) for steam cleaning said device.

2. The barbequing device of claim 1, wherein the steam cleaning means (5) includes a steam generator and a device (25) for delivering the steam fluidly connected to the steam generator.

3. The barbequing device of claim 2, wherein the steam delivery device includes a discharge nozzle for discharging the steam and a trigger for actuating the steam delivery device.

4. The barbequing device of claim 2 or claim 3, wherein the steam delivery device discharges pressurised steam to clean the outer surfaces of the burner (3) and the barbequing device.

5. The barbequing device of claim 4, wherein the steam delivery device is a steam blowgun (5).

6. The barbequing device of any one of claims 2 to 5, wherein the steam generator is connectable to the power source (2).

7. The barbequing device of claim 6, wherein the steam generator includes a steam boiler storable in the cabinet (1).

8. The barbequing device of any one of the preceding claims, further including a food grilling support (6) for supporting one or more food grilling elements (26), wherein the food grilling elements (26) are rotatable relative to the support (6) to uniformly expose said food to the heat from said burner (3).

9. The barbequing device of claim 8, wherein the food grilling support (6) includes holders (12) for retaining the food grilling elements (26) adjacent the burner (3), said holders being rotatable relative to the food grilling support (6).

10. The barbequing device of claim 9, wherein the holders (12) are rotationally driven by a transmission means (11,12), the transmission means including one or more transmission shafts (11) drivable by a motor (9).

11. The barbequing device of claim 10, wherein each transmission shaft (11,11') includes a transmission coupling (12,12') for rotating a respective holder.

12. The barbequing device of claim 11, wherein the holders are integrally formed with the transmission couplings (12) for receiving respective ends of the food grilling elements (26).

13. The barbequing device of claim 12, the holders are axially aligned bores (12,12') formed in the transmission shafts (11,11'), the bores (12,12') having shapes complementary to the ends of the food grilling elements (26) for securely holding the food grilling elements so that the food grilling elements rotate with the transmission shafts (11,11').

14. The barbequing device of any one of claims 8 to 13, wherein the food grilling support includes a bracket (30) for supporting an opposite end of each food grilling element (26), such that each food grilling element is capable of suspending food above the burner (3).

15. The barbequing device of claim 14, wherein the bracket (30) includes positioning means (31) for securely holding the food grilling elements (26) on the bracket.

16. The barbequing device of any one of claims 10 to 15, wherein the motor (9) is an electric motor connected to an electrical power source, the electrical power source including a thermoelectric generator (37), solar cells (39), a steam driven generator (43) or built-in fuel cells (44).

17. The barbequing device of claim 16, wherein the electric power source is connectable to an accumulator (45) by a charging circuit (46), and the electric motor is connectable to the accumulator (45).

18. The barbequing device of any one of the preceding claims, wherein solar cells (39) are provided on the outer surfaces of the device, or thermoelectric generators (37) are provided on inner and outer surfaces of the device adjacent the burner (3) to maximise the temperature differential between the inner and outer surfaces and increase the efficiency of the thermoelectric generators (37).

19. A barbequing device according to any one of the preceding claims, further including a control circuit for controlling the temperature in the burner, a gas-igniting circuit (49) and a safety-guarding circuit, and a steam controlling circuit (48), wherein said control circuit and said steam controlling circuit are connected to the power source and are equipped with control switches arranged on the device.

## Patentansprüche

1. Vorrichtung zum Grillen von Speisen, wobei die Vorrichtung umfasst:
einen Raum (1) zum Aufbewahren einer Energiequelle (2),
einen mit der Energiequelle (2) verbindbaren Brenner zum Kochen der Speise,
**gekennzeichnet durch**
eine Einrichtung (5) zum Dampfreinigen der Vorrichtung.

2. Grillvorrichtung nach Anspruch 1, wobei die Dampfreinigungseinrichtung (5) einen Dampfgenerator und eine mit dem Dampfgenerator fluidisch verbundene Vorrichtung (25) zum Zuführen des Dampfes umfasst.

3. Grillvorrichtung nach Anspruch 2, wobei die Dampfzuführvorrichtung eine Ausstoßdüse zum Ausstoßen des Dampfes und einen Auslöser zum Betätigen der Dampfzuführvorrichtung umfasst.

4. Grillvorrichtung nach Anspruch 2 oder Anspruch 3, wobei die Dampfzuführvorrichtung unter Druck stehenden Dampf ausstößt, um die äußeren Flächen des Brenners (3) und die Grillvorrichtung zu reinigen.

5. Grillvorrichtung nach Anspruch 4, wobei die Dampfzuführvorrichtung eine Dampfspritzpistole (5) ist.

6. Grillvorrichtung nach einem der Ansprüche 2 bis 5, wobei der Dampfgenerator mit der Energiequelle (2) verbindbar ist.

7. Grillvorrichtung nach Anspruch 6, wobei der Dampfgenerator einen in dem Raum (1) aufbewahrbaren Dampferhitzer umfasst.

8. Grillvorrichtung nach einem der vorstehenden Ansprüche, ferner umfassend eine Speisegrilllagerung (6) zum Lagern eines oder mehrerer Speisegrillelemente (26), wobei die Speisegrillelemente (26) relativ zu der Lagerung (6) drehbar sind, um die Speise gleichmäßig der Hitze von dem Brenner (3) auszusetzen.

9. Grillvorrichtung nach Anspruch 8, wobei die Speisegrilllagerung (6) Halter (12) zum Halten der Speisegrillelemente (26) nahe dem Brenner (3) umfasst, wobei die Halter relativ zu der Speisegrilllagerung (6) drehbar sind.

10. Grillvorrichtung nach Anspruch 9, wobei die Halter (12) durch eine Getriebeeinrichtung (11, 12) drehbar angetrieben sind, wobei die Getriebeeinrichtung eine oder mehrere durch einen Motor (9) antreibbare Getriebewellen (11) umfasst.

11. Grillvorrichtung nach Anspruch 10, wobei jede Getriebewelle (11, 11') eine Getriebekupplung (12, 12') zum Drehen eines zugehörigen Halters umfasst.

12. Grillvorrichtung nach Anspruch 11, wobei die Halter zum Aufnehmen zugehöriger Enden der Speisegrillelemente (26) integral mit den Getriebekupplungen (12) ausgebildet sind.

13. Grillvorrichtung nach Anspruch 12, wobei die Halter in den Getriebewellen (11, 11') ausgebildete axial ausgerichtete Vertiefungen (12, 12') sind, welche zu den Enden der Speisegrillelemente (26) komplementäre Formen aufweisen, um die Speisegrillelemente derart sicher zu halten, dass die Speisegrillelemente mit den Getriebewellen (11, 11') rotieren.

14. Grillvorrichtung nach einem der Ansprüche 8 bis 13, wobei die Speisegrilllagerung eine Halterung (30) zum Lagern eines gegenüberliegenden Endes jedes Speisegrillelements (26) umfasst, so dass jedes Speisegrillelement dazu geeignet ist, Speisen über dem Brenner (3) zu halten.

15. Grillvorrichtung nach Anspruch 14, wobei die Halterung (30) eine Positioniereinrichtung (31) zum sicheren Halten der Speisegrillelemente (26) auf der Halterung umfasst.

16. Grillvorrichtung nach einem der Ansprüche 10 bis 15, wobei der Motor (9) ein mit einer elektrischen Stromquelle verbundener Elektromotor ist, wobei die elektrische Stromquelle einen thermoelektrischen Generator (37), Solarzellen (39), einen dampfgetriebenen Generator (43) oder eingebaute Brennstoffzellen (44) umfasst.

17. Grillvorrichtung nach Anspruch 16, wobei die elektrische Stromquelle durch eine Ladeschaltung (46) mit einem Akkumulator (45) verbindbar ist, und der elektrische Motor mit dem Akkumulator (45) verbindbar ist.

18. Grillvorrichtung nach einem der vorhergehenden Ansprüche, wobei an den äußeren Flächen der Vorrichtung Solarzellen (39) vorgesehen sind, oder thermoelektrische Generatoren (37) an inneren und äußeren Flächen der Vorrichtung nahe dem Brenner (3) vorgesehen sind, um den Temperaturunterschied zwischen den inneren und äußeren Flächen zu maximieren und die Effizienz der thermoelektrischen Generatoren (37) zu erhöhen.

19. Grillvorrichtung nach einem der vorstehenden Ansprüche, ferner umfassend eine Steuerschaltung zum Steuern der Temperatur in dem Brenner, eine Gasanzündschaltung (49) und eine Sicherheitsüberwachungsschaltung, und eine Dampfsteuerschaltung (48), wobei die Steuerschaltung und die Dampfsteuerschaltung mit der Energiequelle verbunden sind und mit an der Vorrichtung angeordneten Steuerschaltern ausgestattet sind.

## Revendications

1. Dispositif de cuisson d'aliments au barbecue, ledit dispositif incluant :
une armoire (1) pour stocker une source d'énergie (2),
un brûleur (3) pouvant être connecté à ladite source d'énergie (2) pour cuire lesdits aliments,
**caractérisé par**
un moyen (5) pour nettoyer à la vapeur ledit dispositif.

2. Dispositif de cuisson au barbecue selon la revendication 1, dans lequel le moyen de nettoyage à la vapeur (5) inclut un générateur de vapeur et un dispositif (25) pour délivrer la vapeur en connexion de fluide avec le générateur de vapeur.

3. Dispositif de cuisson au barbecue selon la revendication 2, dans lequel le dispositif de délivrance de vapeur inclut une buse de décharge pour décharger la vapeur et une gâchette pour actionner le dispositif de délivrance de vapeur.

4. Dispositif de cuisson au barbecue selon la revendication 2 ou la revendication 3, dans lequel le dispositif de délivrance de vapeur décharge de la vapeur sous pression pour nettoyer les surfaces extérieures du brûleur (3) et le dispositif de cuisson au barbecue.

5. Dispositif de cuisson au barbecue selon la revendication 4, dans lequel le dispositif de délivrance de vapeur est un pistolet à vapeur (5).

6. Dispositif de cuisson au barbecue selon l'une quelconque des revendications 2 à 5, dans lequel le générateur de vapeur peut être connecté à la source d'énergie (2).

7. Dispositif de cuisson au barbecue selon la revendication 6, dans lequel le générateur de vapeur inclut une chaudière à vapeur pouvant être stockée dans l'armoire (1).

8. Dispositif de cuisson au barbecue selon l'une quelconque des revendications précédentes, incluant en outre un support (6) pour griller des aliments pour supporter un ou plusieurs éléments pour griller des aliments (26), dans lequel les éléments pour griller des aliments (26) sont rotatifs par rapport au support (6) pour exposer uniformément lesdits aliments à la chaleur provenant dudit brûleur (3).

9. Dispositif de cuisson au barbecue selon la revendication 8, dans lequel le support (6) pour griller des aliments inclut des systèmes de maintien (12) pour maintenir les éléments pour griller des aliments (26) adjacents au brûleur (3), lesdits systèmes de maintien étant rotatifs par rapport au support (6) pour griller des aliments.

10. Dispositif de cuisson au barbecue selon la revendication 9, dans lequel les systèmes de maintien (12) sont entraînés en rotation par un moyen de transmission (11, 12), le moyen de transmission incluant un ou plusieurs arbres de transmission (11) pouvant être entraînés par un moteur (9).

11. Dispositif de cuisson au barbecue selon la revendication 10, dans lequel chaque arbre de transmission (11, 11') inclut un accouplement de transmission (12, 12') pour faire tourner un système de maintien respectif.

12. Dispositif de cuisson au barbecue selon la revendication 11, dans lequel les systèmes de maintien sont formés de façon intégrale avec les accouplements de transmission (12) pour recevoir des extrémités respectives des éléments pour griller des aliments (26).

13. Dispositif de cuisson au barbecue selon la revendication 12, dans lequel les systèmes de maintien sont des trous (12, 12') alignés axialement formés dans les arbres de transmission (11, 11'), les trous (12, 12') ayant des formes complémentaires des extrémités des éléments pour griller des aliments (26) pour maintenir en toute sécurité les éléments pour griller des aliments de sorte que les éléments pour griller des aliments tournent avec les arbres de transmission (11, 11').

14. Dispositif de cuisson au barbecue selon l'une quelconque des revendications 8 à 13, dans lequel le support pour griller des aliments inclut un support (30) pour supporter une extrémité opposée de chaque élément pour griller des aliments (26) de sorte que chaque élément pour griller des aliments est apte à suspendre des aliments au dessus du brûleur (3).

15. Dispositif de cuisson au barbecue selon la revendication 14, dans lequel le support (30) inclut un moyen de positionnement (31) pour maintenir en toute sécurité les éléments pour griller des aliments (26) sur le support.

16. Dispositif de cuisson au barbecue selon l'une quelconque des revendications 10 à 15, dans lequel le moteur (9) est un moteur électrique connecté à une source d'énergie électrique, la source d'énergie électrique incluant un générateur thermoélectrique (37), des cellules solaires (39), un générateur à vapeur (43) ou des piles à combustible intégrées (44).

17. Dispositif de cuisson au barbecue selon la revendication 16, dans lequel la source d'énergie électrique peut être connectée à un accumulateur (45) par l'intermédiaire d'un circuit de charge (46), et le moteur électrique peut être connecté à l'accumulateur (45).

18. Dispositif de cuisson au barbecue selon l'une quelconque des revendications précédentes, dans lequel les cellules solaires (39) sont prévues sur les surfaces extérieures du dispositif, ou bien les générateurs thermoélectriques (37) sont prévus sur les surfaces intérieures et extérieures du dispositif adjacentes au brûleur (3) pour maximiser le différentiel de température entre les surfaces intérieures et extérieures et augmenter l'efficacité des générateurs thermoélectriques (37).

19. Dispositif de cuisson au barbecue selon l'une quelconque des revendications précédentes, incluant en outre un circuit de commande pour commander la température dans le brûleur, un circuit d'allumage de gaz (49) et un circuit de sécurité, et un circuit de commande de vapeur (48), dans lequel ledit circuit de commande et ledit circuit de commande de vapeur sont connectés à la source d'énergie et sont équipés de commutateurs de commande agencés sur le dispositif.
